# EUROPEAN PATENT APPLICATION

(11) **EP 4 567 478 A1**
(43) Date of publication of application: **11.06.2025**
(21) Application number: 23849911.5
(22) Date of filing: 20.07.2023
(51) Int. Cl.: G02B 5/30

(54) **INORGANIC SUBSTRATE-ATTACHED POLARIZING PLATE AND METHOD FOR PRODUCING SAME**

(30) Priority: 01.08.2022 JP 2022122476
(71) Applicant: Okura Industrial Co., Ltd., Marugame-shi, Kagawa 763-8508 (JP)
(72) Inventor: ONISHI, Kazuma, Marugame-shi, Kagawa 763-8508 (JP); GOTO, Keisuke, Marugame-shi, Kagawa 763-8508 (JP); YANO, Takahisa, Marugame-shi, Kagawa 763-8508 (JP)
(74) Representative: Becker, Eberhard
(86) International application number: PCT/JP2023/026583
(87) International publication number: WO 2024/029356

(57) **Abstract**

To provide an inorganic substrate-attached polarizing plate in which appearance defects caused by light energy, etc. are suppressed and which has excellent durability. The inorganic substrate-attached polarizing plate comprises: a polarizing plate; and a translucent inorganic substrate laminated on at least one surface of the polarizing plate with a bonding layer therebetween, wherein the bonding layer is composed of a triazine derivative-containing molecular bonding agent for bonding the polarizing plate and the inorganic substrate through chemical bonds.

## Description

### Technical Field

The present invention relates to an inorganic substrate-attached polarizing plate, in which a polarizing plate and an inorganic substrate are laminated via a molecular joining agent.

### Related Art

Conventionally, as an optical component that allows light polarized or wave-polarized in a specific direction to pass through, there is known an inorganic substrate-attached polarizing plate having a structure in which a polarizing plate is laminated on an inorganic base material having light transmissivity such as glass or crystal via a gluing agent (See Patent Document 1)

As polarizing plates, absorption type polarizing plates in which transparent protective films are laminated on both sides of a polarizing film (PVA polarizing film) composed of polyvinyl alcohol-based resin, and reflection type polarizing plates using wire grid polarizing films are known.

### Citation List

### Patent Literature

Patent Document 1: WO13/154139

### SUMMARY OF INVENTION

### Technical Problem

PVA polarizing films are made by adsorption-orientation of iodine or dichroic dye on uniaxially stretched polyvinyl alcohol-based resin films. However, due to their characteristics, PVA polarizing films absorb light parallel to an absorption axis, which causes a temperature increase in the PVA polarizing film due to the absorbed light energy, resulting in shrinkage stress in the stretching direction and thermal shrinkage. When a PVA polarizing film undergoes thermal shrinkage, it leads to appearance deformations (or appearance defects) such as unevenness or wrinkles in the PVA polarizing film. In image display devices such as liquid crystal displays, PVA polarizing films with appearance defects cause image defects and reduced contrast.

In recent years, image display devices and the like are required to have high brightness and high resolution, and light sources with large or high values of luminous flux, luminous intensity, brightness, and light density are used. When such light sources are used, the light energy absorbed by PVA polarizing films increases, making appearance defects due to thermal shrinkage of PVA polarizing films more pronounced.

On the other hand, a wire grid polarizing film is a transparent base film with multiple linear metal fine wires extending parallel to it, and has the characteristics of transmitting light with a linear polarization component having an electric field vector perpendicular to the extension direction of the metal fine wires and reflecting light with a linear polarization component having an electric field vector in the extension direction of the metal fine wires, among the incident light, and is known to have better heat resistance than PVA polarizing films. However, even with the wire grid polarizing film, when using light sources with high values of light density etc., appearance deformations may occur due to temperature increase in the wire grid polarizing film caused by light energy that cannot be fully reflected, which may lead to image defects and reduced contrast in image display devices.

The present invention has been made in view of such problems, and its objective is to provide an inorganic substrate-attached polarizing plate that suppresses appearance defects of the polarizing plate caused by light energy etc., and has excellent durability.

### Solution to Problem

As a result of intensive research to suppress appearance defects of polarizing plates caused by light energy etc., the inventors of the present invention have found that by using a molecular joining agent that joins the polarizing plate and the inorganic substrate through chemical bonding, it is possible to more firmly adhere the polarizing plate and the inorganic base material, efficiently dissipate heat generated in the polarizing plate to the inorganic substrate, reduce the thermal load on the polarizing plate, and consequently suppress appearance defects of the polarizing plate, which led to the completion of the present invention.

According to the present invention, (1) an inorganic substrate-attached polarizing plate is provided, which includes a polarizing plate; and an inorganic substrate having light transmissivity laminated on at least one surface of the polarizing plate via a joining layer, in which the joining layer is composed of a molecular joining agent containing a triazine derivative that joins the polarizing plate and the inorganic substrate through chemical bonding; (2) an inorganic substrate-attached polarizing plate as described in (1) is provided, in which the triazine derivative is a compound containing two or more OH groups and/or OH generating groups and one triazine ring; (3) an inorganic substrate-attached polarizing plate as described in (2) is provided, in which the polarizing plate is an absorption type polarizing plate having a polarizing film composed of polyvinyl alcohol-based resin and a protective film having light transmissivity; (4) an inorganic substrate-attached polarizing plate as described in (3) is provided, in which OH groups on a surface of the protective film and/or OH groups on a surface of the inorganic substrate are chemically bonded with the OH groups or OH generating groups of the triazine derivative by dehydration condensation; (5) an inorganic substrate-attached polarizing plate as described in (2) is provided, in which the polarizing plate is a reflection type polarizing plate having multiple linear metal fine wires and a base film having light transmissivity; (6) an inorganic substrate-attached polarizing plate as described in (5) is provided, in which OH groups on a surface of a base film and/or OH groups on a surface of the inorganic substrate are chemically bonded with the OH groups or OH generating groups of the triazine derivative by dehydration condensation; (7) an inorganic substrate-attached polarizing plate as described in (1) is provided, in which the inorganic substrate has a thermal conductivity of 0.7 W/mK or higher; (8) a method for producing the inorganic substrate-attached polarizing plate as described in any of (1) to (7) is provided; the method has a step of providing the molecular joining agent on a surface of the polarizing plate and/or the inorganic substrate, and a step of joining the polarizing plate and the inorganic substrate through chemical bonding by laminating them via the molecular joining agent existing on a surface of the polarizing plate and/or the inorganic substrate.

### Effects of Invention

The inorganic substrate-attached polarizing plate of the present invention can reduce the thermal load on the polarizing plate and suppress appearance defects of the polarizing plate caused by light energy etc., because the polarizing plate and the inorganic substrate are joined through chemical bonding. Moreover, the inorganic substrate-attached polarizing plate of the present invention is capable of suppressing appearance defects of the polarizing plate, and therefore has high durability that allows the performance of the polarizing plate to be maintained for a long period of time.

### BRIEF DESCRIPTION OF DRAWINGS

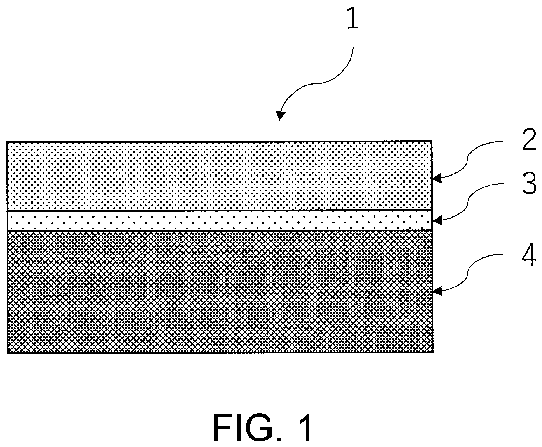

[FIG. 1] A schematic cross-sectional view showing an example of an inorganic substrate-attached polarizing plate of the present invention.

### DESCRIPTION OF THE EMBODIMENTS

The present invention will be described in detail below. Moreover, the present invention is not limited to the following embodiments, and various embodiments can be made within the range that exerts the effects of the present invention.

### [Inorganic substrate-attached polarizing plate]

FIG. 1 shows an example of the inorganic substrate-attached polarizing plate of the present invention. An inorganic substrate-attached polarizing plate 1 shown in FIG. 1 includes a polarizing plate 2, and an inorganic substrate 4 laminated on at least one surface of the polarizing plate 2 via a joining layer 3. More specifically, the polarizing plate 2 and the inorganic substrate 4 are laminated via the joining layer 3 composed of a molecular joining agent using a molecular joining technology for joining the two through chemical bonding.

### [Polarizing plate]

As the polarizing plate, examples include an absorption type polarizing plate in which a protective film is laminated on a polarizing film having absorption dichroism at any wavelength of 380 to 780 nm, and a reflection type polarizing plate using a wire grid polarizing film in which multiple linear metal fine wires extend in parallel on a base film.

### [Absorption type polarizing plate]

The absorption type polarizing plate is one in which a protective film is laminated on a polarizing film having absorption dichroism at any wavelength of 380 to 780 nm. As the polarizing film having absorption dichroism at any wavelength of 380 to 780 nm, examples include a polyvinyl alcohol-based resin film (H-type polarizing film) in which iodine and/or dichroic dye is adsorption-oriented, or a polyvinyl alcohol-based resin film (K-type polarizing film) in which light-absorbing vinylene block segments are formed in the polymer by dehydrating polyvinyl alcohol resin.

The H-type polarizing film composed of polyvinyl alcohol-based resin in which iodine and/or dichroic dye is adsorption-oriented may be produced by a method including the steps of: uniaxial stretching a polyvinyl alcohol-based resin film; dyeing and adsorbing the polyvinyl alcohol-based resin film with iodine and/or dichroic dye; crosslinking-treating the polyvinyl alcohol-based resin film adsorbed with iodine and/or dichroic dye using a crosslinking solution such as boric acid aqueous solution; and water-washing treating the polyvinyl alcohol-based resin film.

As the polyvinyl alcohol-based resin, a saponified product of polyvinyl acetate resin may be used. Examples of polyvinyl acetate resin include polyvinyl acetate, which is a homopolymer of vinyl acetate, and copolymers of vinyl acetate with other monomers that may be copolymerized. Examples of other monomers that may be copolymerized with vinyl acetate include unsaturated carboxylic acids, olefins, vinyl ethers, unsaturated sulfonic acids, and (meth)acrylamides having an ammonium group.

The degree of saponification of the polyvinyl alcohol-based resin is typically 85 to 100 mol%, and 98 mol% or higher is preferable. The polyvinyl alcohol-based resin may be modified, for example, polyvinyl formal or polyvinyl acetal modified with aldehydes may also be used. The average degree of polymerization of the polyvinyl alcohol-based resin is typically 1000 to 10000, and 1500 to 5000 is preferable. The average degree of polymerization of the polyvinyl alcohol-based resin may be determined in accordance with JIS K 6726.

A film formed from such polyvinyl alcohol-based resin is used as the raw film for the polarizing film. The method of forming the polyvinyl alcohol-based resin into a film is not particularly limited, and known methods are adopted. The thickness of the polyvinyl alcohol raw film is not particularly limited, but it is preferable to use one with a thickness of, for example, 10 to 200 µm.

The uniaxial stretching of the polyvinyl alcohol-based resin film may be performed before, simultaneously with, or after dyeing with iodine and/or dichroic dye. In the case of performing uniaxial stretching after dyeing, this uniaxial stretching may be carried out before or during the crosslinking treatment. Additionally, uniaxial stretching may be performed in multiple stages. For uniaxial stretching, the film may be uniaxially stretched between rolls with different peripheral speeds, or it may be uniaxially stretched using heated rolls. Furthermore, the uniaxial stretching may be dry stretching performed in air, or wet stretching performed in a state where the polyvinyl alcohol-based resin film is swollen using a solvent or water. The stretching ratio is typically 3 to 8 times.

As a method for dyeing the polyvinyl alcohol-based resin film with iodine and/or dichroic dye, for example, a method of immersing the film in an aqueous solution containing iodine and/or dichroic dye is adopted. Moreover, it is preferable to subject the polyvinyl alcohol-based resin film to a water immersion treatment before the dyeing treatment.

For the crosslinking treatment after dyeing, for example, a method of immersing the dyed polyvinyl alcohol-based resin film in a boric acid-containing aqueous solution may be mentioned. The crosslinking treatment may be performed in a single step or divided into multiple steps.

For the water-washing treatment after crosslinking, for example, it is performed by immersing the polyvinyl alcohol-based resin film that has been crosslinked after dyeing in water, spraying water as a shower, or combining immersion and spraying. Moreover, after the water-washing treatment, the polyvinyl alcohol-based resin film may be dried by a known method.

A K-type polarizing film composed of polyvinyl alcohol-based resin in which light-absorbing vinylene block segments are formed in the polymer by dehydrating polyvinyl alcohol resin may be produced by a method including the steps of: uniaxially stretching a polyvinyl alcohol-based resin film; dehydration-treating the polyvinyl alcohol-based resin film; crosslinking-treating the dehydration-treated polyvinyl alcohol-based resin film with a crosslinking solution such as a boric acid aqueous solution; and water-washing treating the polyvinyl alcohol-based resin film. Moreover, the raw film is as described above.

The uniaxial stretching of the polyvinyl alcohol-based resin film may be performed at various stages. For example, uniaxial stretching may be carried out before the dehydration treatment, simultaneously with the dehydration treatment, simultaneously with or before or after the boric acid crosslinking following the dehydration treatment. Additionally, uniaxial stretching may be performed in multiple stages. The method of uniaxial stretching is as described above.

As a method for dehydrating the polyvinyl alcohol-based resin film, for example, it may be performed by exposing the polyvinyl alcohol-based resin film to an acid with a pH of 3 or higher, and then heating the exposed film. Specifically, the polyvinyl alcohol-based resin film may be immersed in deionized water for about 1 second to about 5 minutes, and then immersed in an acid with a pH of 3 or higher for a desired time. Moreover, the polyvinyl alcohol-based resin film may also be exposed to a dehydration catalyst in different ways. For example, the film may be dipped or immersed in an aqueous dehydration catalyst for a sufficient retention time to allow the catalyst to diffuse into the film.

As the acid used for the dehydration treatment, any acid may be used that has a pH of 3 or higher and may remove hydrogen atoms and oxygen atoms from the hydroxylated portions of the linear polymer under the presence of heat or other appropriate treatment conditions, leaving conjugated vinylene units. Specifically, hydrochloric acid, hydrobromic acid, hydroiodic acid, phosphoric acid, and sulfuric acid etc. may be mentioned. These acids may also be diluted with water or alcohols such as methanol.

After exposing the polyvinyl alcohol-based resin film to the dehydration catalyst, the polyvinyl alcohol-based resin film and the adsorbed catalyst may be heated, thereby converting a portion of the oriented film into polyvinylene, which is the desired dehydration product. The film may be heated by conduction heating, convection heating, radiation heating, or a combination thereof. For example, the film and catalyst may be passed through a heating oven at a temperature range of about 88°C to about 205°C for about a few seconds to about 10 minutes. In another method, the film and catalyst may be exposed to microwave radiation heating, laser heating, or radiant infrared heating.

In the dehydration treatment process, a portion of the vinyl alcohol polymer in the polyvinyl alcohol-based resin film is converted into polarizing molecules of poly(vinylene-co-vinyl alcohol) block copolymer. The effect of the dehydration treatment is to form conjugated polyvinylene blocks from polyvinyl alcohol blocks. By orienting the PVA matrix in one direction, the transition moments of the conjugated polyvinylene blocks are also oriented, and the material becomes visibly dichroic.

As a crosslinking treatment after the dehydration treatment, for example, a method of immersing the dehydration-treated polyvinyl alcohol-based resin film in a boric acid-containing aqueous solution may be mentioned. Specifically, the dehydration-treated polyvinyl alcohol-based resin film may be brought into contact with a boric acid aqueous solution having a concentration of 10-20% at a temperature of 85-95°C.

As a water-washing treatment after crosslinking, for example, it may be performed by immersing the polyvinyl alcohol-based resin film that has been crosslinked after dehydration treatment in water, spraying water as a shower, or combining immersion and spraying. Moreover, after the water-washing treatment, the polyvinyl alcohol-based resin film may be dried by a known method.

The thickness of the polarizing film is not particularly limited, but is preferably 50 µm or less, more preferably 30 µm or less, and even more preferably 25 µm or less. The thickness of the polarizing film is typically 1 µm or more, and preferably 3 µm or more.

The protective film supports the polarizing film, which is easily broken and difficult to handle on its own, to facilitate its handling and protect the polarizing film, and is made of a material that has light transmissivity for visible light. The light transmissivity referred to here means that a total light transmittance is 80% or higher, preferably 85% or higher, and more preferably 90% or higher. The light transmittance may be measured using a spectrophotometer (UV-visible-near infrared spectrophotometer "V-570" manufactured by JASCO Corporation) in accordance with JIS K0115.

As materials having light transmissivity for visible light, for example, organic materials, inorganic materials, and organic-inorganic hybrid materials may be mentioned. Examples of organic materials include triacetylcellulose resins, diacetylcellulose resins, polyester resins, polyimide resins, polyamide resins, polyolefin resins such as polyethylene and polypropylene, cycloolefin resins such as cycloolefin polymers and cycloolefin copolymers, polyethersulfone resins, polysulfone resins, polyvinyl chloride, acrylic resins, polycarbonate resins, polystyrene resins, and urethane resins. Examples of inorganic materials include silsesquioxane resins and silazane resins. Examples of organic-inorganic hybrid materials include resins composed of silsesquioxane derivatives having organic functional groups such as (meth)acryloyl groups.

The thickness of the protective film is not particularly limited, and may be appropriately designed to facilitate the handling of the polarizing film and protect the polarizing film. It is preferably 500 µm or less, more preferably 100 µm or less, and even more preferably 50 µm or less. The thickness of the protective film is typically 5 µm or more, and preferably 10 µm or more.

The lamination of the polarizing film and the protective film is not particularly limited, but for example, they may be laminated via an adhesive or a gluing agent. As the adhesive, conventionally known ones may be used, for example, polyvinyl alcohol adhesives, urethane adhesives, acrylic adhesives, and epoxy adhesives may be mentioned. As the gluing agent, conventionally known ones may be used, for example, acrylic gluing agents, silicone gluing agents, urethane gluing agents, and polyester gluing agents may be mentioned. Crosslinking agents etc. may be added to the adhesive or gluing agent as needed. Moreover, the lamination of the polarizing film and the protective film may also be joined by a molecular joining agent using the molecular joining technology to be described later.

The thickness of the adhesive layer composed of adhesive or gluing agent may be appropriately designed according to the adhesive strength etc., and is not particularly limited, but is preferably 50 µm or less, more preferably 30 µm or less, and even more preferably 20 µm or less. The thickness of the adhesive layer is typically 1 µm or more, and preferably 3 µm or more.

### [Reflection type polarizing plate]

The reflection type polarizing plate is a wire grid polarizing film with a structure in which multiple linear metal fine wires are arranged in parallel at a predetermined pitch on a base film, and has the characteristics of transmitting light with a linear polarization component having an electric field vector perpendicular to the extension direction of the metal fine wires and reflecting light with a linear polarization component having an electric field vector in the extension direction of the metal fine wires, among the incident light.

The base film is a film for forming the metal fine wires, and is composed of a material that has light transmissivity for visible light. Moreover, the light transmissivity referred to here is as described above.

Materials having light transmissivity for visible light include organic materials, inorganic materials, organic-inorganic hybrid materials, etc. Organic materials include non-crystalline thermoplastic resins such as polymethyl methacrylate resins, polycarbonate resins, polystyrene resins, cycloolefin resins, crosslinked polyethylene resins, polyvinyl chloride resins, polyacrylate resins, polyphenylene ether resins, modified polyphenylene ether resins, polyetherimide resins, polyethersulfone resins, polysulfone resins, polyetherketone resins; crystalline thermoplastic resins such as polyethylene terephthalate resins, polyethylene naphthalate resins, polyethylene resins, polypropylene resins, polybutylene terephthalate resins, aromatic polyester resins, polyacetal resins, polyamide resins; and curable resins such as acrylic, epoxy, and urethane resins. Inorganic materials include silsesquioxane resins, silazane resins, etc. Organic-inorganic hybrid materials include resins composed of silsesquioxane derivatives having organic functional groups such as (meth)acryloyl groups, etc.

Materials constituting the metal fine wires include, for example, metals such as aluminum, silver, copper, chromium, titanium, nickel, tungsten, iron, or alloys thereof.

The pitch of the metal fine wires is preferably 150 nm or less, more preferably 145 nm or less, and even more preferably 120 nm or less. The lower limit of the pitch of the metal fine wires is, for example, 70 nm. The width of the metal fine wires is preferably 20 nm to 400 nm, more preferably 30 nm to 200 nm, and even more preferably 50 nm to 100 nm.

Various functional layers may be formed on the surface of the polarizing plate as needed. Examples of functional layers include conductive layers, antistatic layers, anti-glare (non-glare) layers, anti-fouling layers such as photocatalytic layers, anti-reflection layers, hard coat layers, ultraviolet shielding layers, heat ray shielding layers, electromagnetic wave shielding layers, gas barrier layers, etc.

### [Joining layer]

The joining layer is composed of a molecular joining agent using molecular joining technology that joins through chemical bonding. Molecular joining technology is a technique for joining materials through chemical bonding with one or a few molecular layers, and involves, for example, converting a surface of an adherend to a surface with one type of functional group and joining via the bonding of the functional group.

The molecular joining agent includes a triazine derivative having functional groups that join the polarizing plate and the inorganic substrate through chemical bonding. The joining layer composed of a molecular joining agent containing a triazine derivative preferably includes the triazine derivative as a main component. Here, "main component" means that among the components constituting the joining layer, the composition ratio is 50% by weight or more, preferably 60% by weight or more, more preferably 80% by weight or more, even more preferably 90% by weight or more, and particularly preferably 95% by weight or more.

The triazine derivative is preferably a compound containing two or more OH groups and/or OH generating groups and one triazine ring. The triazine derivative containing two or more OH groups and/or OH generating groups and one triazine ring forms chemical bonds by dehydration condensation between the OH groups on the surface of the polarizing plate and/or the OH groups of the inorganic substrate, and the OH groups or OH generating groups of the triazine derivative. More specifically, in one embodiment, chemical bonds are formed by dehydration condensation between the OH groups on the surface of the protective film in the absorption type polarizing plate and/or the OH groups of the inorganic substrate, and the OH groups or OH generating groups of the triazine derivative. In one embodiment, chemical bonds are formed by dehydration condensation between the OH groups on the surface of the base film in the reflection type polarizing plate and/or the OH groups of the inorganic substrate, and the OH groups or OH generating groups of the triazine derivative. Conventionally known compounds may be used as the triazine derivative. The OH group or OH generating group is preferably an alkoxysilyl group (including cases where the alkoxy group is an OH group).

The molecular joining agent may include components other than the triazine derivative to the extent that they do not hinder the effects of the present invention. Examples of components other than the triazine derivative include initiators, crosslinking agents, fine particles, ultraviolet absorbers, defoaming agents, thickeners, dispersants, surfactants, catalyst s, lubricants, antistatic agents, etc.

There is no particular restriction on the upper limit of the thickness of the joining layer, but for example, it is preferably 5 µm or less, more preferably 1 µm or less, even more preferably 0.01 µm or less, and particularly preferably 0.001 µm or less. There is no particular restriction on the lower limit of the thickness of the joining layer, but since molecular joining technology is a technique for joining materials through chemical bonding with one or a few molecular layers, ideally it is the thickness of a single molecular layer.

### [Inorganic substrate]

The inorganic substrate supports the polarizing plate and facilitates its handling, and is composed of an inorganic material that has light transmissivity for visible light. Moreover, the meaning of "having light transmissivity" is as described above.

There is no particular restriction on the inorganic material having light transmissivity, but examples include silicate glass, borosilicate glass, titanium silicate glass, fluoride glasses such as zirconium fluoride, fused quartz, crystal, sapphire, YAG crystal, fluorite, magnesia, spinel (MgO·Al2O3), etc.

From the viewpoint of efficiently dissipating heat generated in the polarizing plate to the outside and suppressing appearance defects of the polarizing plate, it is preferable that the inorganic substrate has a higher thermal conductivity than the polarizing plate. The thermal conductivity is preferably 0.7 W/mK or higher, more preferably 0.9 W/mK or higher, even more preferably 1 W/mK or higher, and particularly preferably 5 W/mK or higher. Examples of such materials include glass (thermal conductivity: 0.94 to 1 W/mK), crystal (thermal conductivity: 8 W/mK), sapphire (thermal conductivity: 40 W/mK), etc.

The thickness of the inorganic substrate is not particularly limited and may be appropriately designed to facilitate handling of the polarizing plate and protect the polarizing plate. For example, it may be 10 to 3000 µm, preferably 50 to 2000 µm, more preferably 100 to 1500 µm, and particularly preferably 300 µm to 1000 µm.

### [Method for producing inorganic substrate-attached polarizing plate]

Next, the method for producing the inorganic substrate-attached polarizing plate will be described. The method for producing the inorganic substrate-attached polarizing plate includes a step of providing a molecular joining agent on the surface of the polarizing plate and/or the inorganic substrate, and a step of laminating them through the molecular joining agent existing on the surface of the polarizing plate and/or the inorganic substrate, thereby joining the polarizing plate and the inorganic substrate through chemical bonding.

### [Step 1: Preparation]

First, the aforementioned polarizing plate and inorganic substrate are prepared. The polarizing plate and inorganic substrate may be either in long form or sheet form. The surfaces of the polarizing plate and inorganic substrate may be cleaned as necessary, for example, by cleaning treatment with cleaning agents such as ethanol or acetone. The surfaces of the polarizing plate and inorganic substrate may be subjected to activation treatment as necessary, for example, by ultraviolet irradiation treatment, corona discharge treatment, plasma treatment, etc.

Additionally, a solution or dispersion in which the aforementioned molecular joining agent is dissolved is prepared. The molecular joining agent may be diluted with a solvent. Examples of solvents include water, alcohols (e.g., methanol, ethanol, isopropanol, ethylene glycol, propylene glycol, cellosolve, carbitol), ketones (e.g., acetone, methyl ethyl ketone, cyclohexanone), aromatic hydrocarbons (e.g., benzene, toluene, xylene), aliphatic hydrocarbons (e.g., hexane, octane, decane, dodecane, octadecane), esters (e.g., ethyl acetate, methyl propionate, methyl phthalate), ethers (e.g., tetrahydrofuran, ethyl butyl ether, anisole), etc., and may be the mixture thereof. The content of the triazine derivative may be appropriately set considering coating operations, etc. For example, it may be 0.00001 to 10 wt%, preferably 0.0001 to 1 wt%, more preferably 0.0005 to 0.5 wt%, and even more preferably 0.001 to 0.2 wt%. The molecular joining agent may be either a thermal reactive agent or an ultraviolet reactive agent.

### [Step 2: Coating]

The molecular joining agent is provided on the surface of the polarizing plate and/or inorganic substrate to form a joining layer composed of the molecular joining agent on the surface of the polarizing plate and/or inorganic substrate. Specifically, this is achieved by coating the aforementioned solution in which the molecular joining agent is dissolved onto the surface of the polarizing plate and/or inorganic substrate. Subsequently, drying is performed as necessary, and as the solvent evaporates, the molecular joining agent remains on the surface of the polarizing plate and/or inorganic substrate, forming the joining layer. The coating method is not particularly limited, and known methods may be adopted. For example, wire bar coating method, dip method, spray method, spin coating method, roll coating method, gravure coating method, air knife coating method, curtain coating method, slide coating method, extrusion coating method, die coating method, etc. may be mentioned. The drying method is not particularly limited, and known methods may be adopted.

### [Step 3: Lamination]

After the molecular joining agent on the surface of the polarizing plate and/or inorganic substrate are provided, they are laminated through the molecular joining agent existing on the surface of the polarizing plate and/or inorganic substrate. Specifically, this is achieved by laminating the polarizing film and/or support base material such that the surfaces coated with the solution in which the molecular joining agent is dissolved face each other.

### [Step 4: Crimping]

Next, the polarizing plate and the inorganic substrate are crimped, and the polarizing plate and the support base material are integrally joined through chemical bonding. Specifically, this is achieved by heating and/or irradiating with ultraviolet light while a pressure force is applied to the polarizing plate towards the inorganic substrate side, by heating and/or irradiating with ultraviolet light while a pressure force is applied to the inorganic substrate towards the polarizing plate side, or by heating and/or irradiating with ultraviolet light while a pressure force is applied to each of the polarizing plate and the inorganic substrate.

The pressure force may be sufficient as long as the OH groups of the triazine derivative existing on the surface of the polarizing plate and/or inorganic substrate or the OH groups generated from OH generating groups to come into contact with the other surface. The pressure force is not particularly limited, but for example, it is preferably 0.01 to 50 MPa, more preferably 0.1 to 20 MPa, further preferably 0.5 to 10 MPa, and particularly preferably 0.5 to 5 MPa. The application time is, for example, 0.1 to 200 minutes in the case of a process using a press machine, and 0.1 to 300 seconds in the case of a roll-to-roll process. As a result, even if there are minute unevenness on the surface of the polarizing plate or inorganic substrate, the OH groups of the triazine derivative existing on the surface of the polarizing plate or inorganic substrate reach and bond to the other surface. In other words, the polarizing plate and the inorganic substrate are strongly bonded through chemical bonding (reaction) by the triazine derivative. In the case where the molecular joining agent is a thermal reactive agent, the heating temperature is a temperature at which the chemical reaction of the triazine derivative is promoted. The heating temperature is, for example, 30 to 300°C, preferably 50 to 250°C, more preferably 70 to 200°C, and further preferably 80 to 150°C. In the case where the molecular joining agent is a ultraviolet reactive agent, the cumulative amount of ultraviolet light on the surface of the polarizing plate and/or inorganic substrate is, for example, 100 to 3,000 mJ/cm² or higher.

### Examples

### (Preparation of polarizing plate)

A polyvinyl alcohol-based polarizing film (iodine-based, thickness 25 µm) laminated with a protective film A (triacetyl cellulose-based film, thickness 80 µm) was prepared. The surface opposite to the surface laminated with the protective film A of the polarizing film was cleaned with ethanol and dried, then subjected to corona discharge treatment (150 W·min/m²) on the surface. A gluing agent layer (thickness: 15 µm, NCF-211S, manufactured by Lintec Corporation) was attached to the corona discharge treated surface of the polarizing film, and a protective film B (cycloolefin-based film, thickness 50 µm) was attached to a surface of the gluing agent layer opposite to the polarizing film and pressed with a hand roller to produce a polarizing plate (protective film A/iodine-based polarizing film/gluing agent layer/protective film B).

### (Example 1)

The surface of protective film B of the polarizing plate was cleaned with ethanol and dried, then subjected to corona discharge treatment (150 W·min/m²) on that surface. In addition, a crystal substrate (length 23.5 mm × width 20.0 mm × thickness 0.7 mm) was prepared as an inorganic substrate, and the crystal substrate was ultrasonically cleaned in acetone (10 minutes), dried, and then was subjected to corona discharge treatment (150 W·min/m²) on that surface. Next, an aqueous solution containing 0.1% by weight of triazine derivative (product name: MB1015 aqueous solution, manufactured by Sulfur Chemical Laboratory Inc.) was applied to the corona discharge treated surface of the polarizing plate by spin coating method (coating amount: 2 ml, spin rotation speed: 3000 rpm), then dried in a constant temperature and humidity dryer (50°C × 10 minutes) to provide the triazine derivative on the surface of the polarizing plate. Similarly, an aqueous solution containing 0.1% by weight of triazine derivative (product name: MB1015 aqueous solution, manufactured by Sulfur Chemical Laboratory Inc.) was applied to the corona discharge treated surface of the crystal substrate by spin coating method (coating amount: 2 ml, spin rotation speed: 3000 rpm), then placed in a hot air drying oven and dried at 80°C for 10 minutes to provide the triazine derivative on the surface of the crystal substrate. Then, the surfaces of the polarizing plate and the crystal substrate on which the triazine derivative was provided were overlapped, and thermos-compressed (pressure: 10 MPa, temperature: 100°C, time: 12 minutes) using a heat press machine to produce an inorganic substrate-attached polarizing plate (protective film A/iodine-based polarizing film/gluing agent layer/protective film B/joining layer/crystal substrate).

### (Comparative example 1)

The surface of protective film B of the polarizing plate was cleaned with ethanol and dried, then subjected to corona discharge treatment (150 W·min/m²) on that surface. In addition, a crystal substrate (length 23.5 mm × width 20.0 mm × thickness 0.7 mm) was prepared as an inorganic substrate, and the crystal substrate was ultrasonically cleaned in acetone (10 minutes), dried, and then subjected to corona discharge treatment (150 W·min/m²) on that surface. Next, a gluing agent layer (thickness: 15 µm, NCF-211S, manufactured by Lintec Corporation) was attached to the corona discharge treated surface of the polarizing plate, and the crystal substrate was attached to the opposite side of the gluing agent layer from the polarizing plate and pressed with a hand roller to produce an inorganic substrate-attached polarizing plate (protective film A/iodine-based polarizing film/gluing agent layer/protective film B/gluing agent layer/crystal substrate).

The inorganic substrate-attached polarizing plate obtained in Example 1 and Comparative example 1 were evaluated as described below. The evaluation results are shown in Table 1. (Durability Evaluation) Air was blown towards the inorganic substrate-attached polarizing plate (23.5 mm × 20 mm) obtained in the Example and Comparative example, and while applying wind at a constant speed to the polarizing plate, laser light (wavelength: 455 nm) was irradiated for 2 minutes using a laser irradiation device from the polarizing plate side of the inorganic substrate-attached polarizing plate, and, using thermography from the polarizing plate side, the temperature of the hottest spot in the polarizing plate surface was measured as the surface temperature of the polarizing plate. The appearance of the polarizing plate in the inorganic substrate-attached polarizing plate after laser irradiation and the projected image of the inorganic substrate-attached polarizing plate when using a backlight were visually evaluated according to the following criteria. Moreover, the polarizing plate was positioned to absorb the polarization of the laser (the absorption axis of the polarizing film was parallel to the polarization of the laser).
○: No change in appearance or projected image
△: Slight deformation (unevenness, wrinkles, etc.) observed in appearance, and changes (distortion, irregularity) observed in projected image
×: Significant deformation (unevenness, wrinkles, etc.) and discoloration observed in appearance, and major changes (distortion, irregularity) observed in projected image.

**[Table 1]**

| Laser irradiation strength [W/cm²] | Example 1 | | Comparative example 1 | |
|---|---|---|---|---|
| | Surface temperature [°C] | Appearance • Projected Image | Surface temperature [°C] | Appearance • Projected Image |
| 0.81 | 75 | ○ | 79 | ○ |
| 1.00 | 86 | ○ | 93 | Δ |
| 1.17 | 93 | Δ | 106 | × |

As shown in Table 1, the inorganic substrate-attached polarizing plate of Example 1, which is joined using a molecular joining agent employing molecular joining technology to join the absorption type polarizing plate and the inorganic substrate through chemical bonding, exhibited lower surface temperature of the polarizing plate after laser irradiation (4-13°C) compared to the inorganic substrate-attached polarizing plate of Comparative example 1, and showed superior results in terms of appearance and projected image of the polarizing plate after laser irradiation.

### (Example 2)

A wire grid polarizing film (aluminum metal fine wire/cycloolefin-based film (base film), thickness 190 µm) was prepared as the polarizing plate. After cleaning the surface of the base film of the polarizing plate with ethanol and drying, corona discharge treatment (150 W·min/m²) was applied to the surface. In addition, a crystal substrate (length 23.5 mm × width 20.0 mm × thickness 0.7 mm) was prepared as the inorganic substrate. The crystal substrate was ultrasonically cleaned in acetone (10 minutes), dried, and then corona discharge treatment (150 W·min/m²) was applied to the surface. Next, an aqueous solution containing 0.1% by weight of triazine derivative (product name: MB1015 aqueous solution, manufactured by Sulfur Chemical Laboratory Inc.) was applied to the corona discharge treated surface of the polarizing plate by spin coating method (coating amount: 2 ml, spin rotation speed: 3000 rpm), and then dried in a constant temperature and humidity dryer (50°C × 10 minutes) to provide the triazine derivative on the surface of the polarizing plate. Similarly, an aqueous solution containing 0.1% by weight of triazine derivative (product name: MB1015 aqueous solution, manufactured by Sulfur Chemical Laboratory Inc.) was applied to the corona discharge treated surface of the crystal substrate by spin coating method (coating amount: 2 ml, spin rotation speed: 3000 rpm), and then dried in a hot air drying oven at 80°C for 10 minutes to provide the triazine derivative on the surface of the crystal substrate. Then, the surfaces of the polarizing plate and the crystal substrate on which the triazine derivative was provided were overlapped, and thermo-compressed (pressure: 10 MPa, temperature: 100°C, time: 12 minutes) using a heat press machine to produce an inorganic substrate-attached polarizing plate (wire grid polarizing film/joining layer/crystal substrate).

### (Comparative example 2)

A wire grid polarizing film (aluminum metal fine wire/cycloolefin-based film (base film), thickness 190 µm) was prepared as the polarizing plate. After cleaning the surface of the base film of the polarizing plate with ethanol and drying, corona discharge treatment (150 W·min/m²) was applied to the surface. In addition, a crystal substrate (length 23.5 mm × width 20.0 mm × thickness 0.7 mm) was prepared as the inorganic substrate. The crystal substrate was ultrasonically cleaned in acetone (10 minutes), dried, and then corona discharge treatment (150 W·min/m²) was applied to the surface. Next, a gluing agent layer (thickness: 15 µm, NCF-211S, manufactured by Lintec Corporation) was attached to the corona discharge treated surface of the polarizing plate, and the crystal substrate was attached to the opposite side of the gluing agent layer from the polarizing plate and pressed with a hand roller to produce an inorganic substrate-attached polarizing plate (wire grid polarizing film/gluing agent layer/crystal substrate).

The durability evaluation described above was performed on the inorganic substrate-attached polarizing plate obtained in Example 2 and Comparative example 2. The evaluation results are shown in Table 2.

**[Table 2]**

| Laser irradiation strength [W/cm²] | Example 2 | | Comparative example 2 | |
|---|---|---|---|---|
| | Surface temperature [°C] | Appearance • Projected Image | Surface temperature [°C] | Appearance • Projected Image |
| 1.00 | 41 | ○ | 50 | ○ |
| 1.30 | 46 | ○ | 59 | ○ |
| 1.50 | 49 | ○ | 63 | Δ |
| 1.70 | 52 | ○ | 69 | × |
| 2.00 | 57 | ○ | 76 | × |
| 2.35 | 63 | ○ | 85 | × |

As shown in Table 2, the inorganic substrate-attached polarizing plate of Example 2, which is joined using a molecular joining agent employing molecular joining technology to join the reflection type polarizing plate and the inorganic substrate through chemical bonding, exhibited lower surface temperature (9-22°C) of the polarizing plate after laser irradiation compared to the inorganic substrate-attached polarizing plate of Comparative example 2, and showed superior results in terms of appearance and projected image of the polarizing plate after laser irradiation.

As described above, the inorganic substrate-attached polarizing plate joined by molecular joining technology can reduce the thermal load on the polarizing plate, thereby suppressing appearance defects of the polarizing plate caused by light energy etc. Furthermore, since it is possible to suppress appearance defects of the polarizing plate, it has high durability that maintains the performance of the polarizing plate for a long period. Therefore, the inorganic substrate-attached polarizing plate joined by molecular joining technology is particularly useful in applications such as image display devices that use a light source having large or high values of luminous flux, luminous intensity, brightness, light density, and the like.

### Reference Signs List

1: Inorganic substrate-attached polarizing plate
2: Polarizing plate
3: Joining layer
4: Inorganic substrate

## Claims

1. An inorganic substrate-attached polarizing plate, comprising: a polarizing plate; and an inorganic substrate having light transmissivity laminated on at least one surface of the polarizing plate via a joining layer, wherein the joining layer is composed of a molecular joining agent containing a triazine derivative that joins the polarizing plate and the inorganic substrate through chemical bonding.

2. The inorganic substrate-attached polarizing plate according to claim 1, wherein the triazine derivative is a compound containing two or more OH groups and/or OH generating groups and one triazine ring.

3. The inorganic substrate-attached polarizing plate according to claim 2, wherein the polarizing plate is an absorption type polarizing plate having a polarizing film composed of polyvinyl alcohol-based resin and a protective film having light transmissivity.

4. The inorganic substrate-attached polarizing plate according to claim 3, wherein OH groups on a surface of the protective film and/or OH groups on a surface of the inorganic substrate are chemically bonded with the OH groups or OH generating groups of the triazine derivative by dehydration condensation.

5. The inorganic substrate-attached polarizing plate according to claim 2, wherein the polarizing plate is a reflection type polarizing plate having multiple linear metal fine wires and a base film having light transmissivity.

6. The inorganic substrate-attached polarizing plate according to claim 5, wherein OH groups on a surface of a base film and/or OH groups on a surface of the inorganic substrate are chemically bonded with the OH groups or OH generating groups of the triazine derivative by dehydration condensation.

7. The inorganic substrate-attached polarizing plate according to claim 1, wherein the inorganic substrate has a thermal conductivity of 0.7W/mK or higher.

8. A method for producing the inorganic substrate-attached polarizing plate according to any one of claims 1 to 7, the method comprising:
a step of providing the molecular joining agent on a surface of the polarizing plate and/or the inorganic substrate; and
a step of joining the polarizing plate and the inorganic substrate through chemical bonding by laminating them via the molecular joining agent existing on a surface of the polarizing plate and/or the inorganic substrate.
